# FASCICULE DE BREVET EUROPEEN

(11) **EP 2 631 692 B1**
(45) Date de publication et mention de la délivrance du brevet: **18.06.2014**
(21) Numéro de dépôt: 13155159.0
(22) Date de dépôt: 14.02.2013
(51) Int. Cl.: G02B 6/44

(54) **Dispositif de connexion et/ou de stockage de câbles et procédé de montage correspondant**
Anschluss- und/oder Lagerverfahren von Kabeln, und entsprechendes Montageverfahren
Device for connecting and/or storing cables and corresponding mounting method

(30) Priorité: 21.02.2012 FR 1251564
(43) Date de publication de la demande: 28.08.2013
(73) Titulaire: IDEA OPTICAL, 22300 Lannion (FR)
(72) Inventeur: Demaret, Patrick, 78610 PERRAY EN YVELINES (FR)
(74) Mandataire: Dutreix, Hugues Ours

(56) Documents cités:
- EP-A1- 1 302 798
- WO-A1-02/21182
- WO-A2-2007/051611
- FR-A1- 2 959 383
- GB-A- 2 460 452
- US-A- 5 946 440
- US-B1- 6 263 141

## Description

La présente invention concerne de manière générale les boîtiers de connexion et/ou de stockage de câbles.

L'invention concerne plus particulièrement un dispositif de connexion et/ou de stockage de câbles, en particulier pour terminaisons de câbles à fibre optique, destiné à être monté dans une structure d'accueil présentant une face d'introduction qui s'étend entre deux montants de ladite structure d'accueil. Ledit dispositif de connexion et/ou de stockage de câbles comprend un boîtier présentant deux côtés opposés qui sont respectivement situés, à l'état introduit du boîtier dans ladite structure d'accueil, à proximité des montants correspondants de la face d'introduction de ladite structure d'accueil. L'invention concerne également une installation comprenant une structure d'accueil et un tel dispositif de connexion et/ou de stockage de câbles monté dans ladite structure d'accueil. L'invention concerne également un procédé de montage d'un tel dispositif de connexion et/ou de stockage de câbles dans une structure d'accueil.

Les réseaux de télécommunication utilisant des câbles à fibre optique se développent de manière très importante. Il est ainsi nécessaire de prévoir de stocker les surlongueurs de câbles et/ou de prévoir un grand nombre de raccords pour assurer la connexion entre les câbles à fibre optique et les équipements émetteurs/récepteurs. Les raccords entre les câbles à fibre optique se font à l'aide de boîtiers tels que décrits ci-dessus. Du fait du nombre important de câbles à fibre optique et donc de raccords à réaliser et/ou du stockage de surlongueurs de câbles à prévoir, les boîtiers des dispositifs de connexion et/ou de stockage sont empilés les uns sur les autres dans une ou plusieurs structures d'accueil, par exemple dans des armoires.

Les boîtiers sont conçus pour être montés à pivotement autour d'un montant de la face d'introduction d'une armoire et les câbles destinés à entrer et sortir du boîtier cheminent alors le long dudit montant. La mobilité de pivotement du boîtier permet de sortir le boîtier de l'armoire pour permettre à l'opérateur d'intervenir sur le boîtier, par exemple pour procéder au raccordement des câbles à l'intérieur dudit boîtier.

Cependant, les boîtiers des dispositifs connus de l'état de la technique présentent un élément de charnière qui s'étend d'un côté donné du boîtier de sorte que ledit boîtier ne peut être monté pivotant qu'autour d'un montant prédéterminé de la face d'introduction, par exemple le montant droit. L'opérateur ne pourra donc pas monter ledit boîtier à pivotement autour du montant gauche de la face d'introduction de l'armoire. Un problème se pose alors lorsque de nombreux boîtiers sont déjà présents dans l'armoire en étant montés pivotants autour d'un même montant. En effet, les câbles qui courent le long dudit montant génèrent un encombrement important et l'ajout de câbles supplémentaires, du fait de l'introduction d'un boîtier supplémentaire monté pivotant autour dudit montant, risque d'entraver la mobilité de pivotement des boîtiers.

L'opérateur aurait besoin de pouvoir monter ledit boîtier sur l'autre montant pour équilibrer la répartition des câbles.

Le dispositif de connexion et/ou de stockage de câbles décrit dans la demande de brevet publiée sous le numéro FR2959383 répond à cette problématique d'équilibrage de la répartition des câbles. En effet, ledit dispositif de connexion et/ou de stockage de câbles comprend un boîtier de connexion, une charnière à rapporter sur un côté du boîtier et un organe de verrouillage à rapporter de l'autre côté. La charnière est réversible de sorte qu'elle peut être sélectivement fixée sur un côté du boîtier ou sur le côté opposé du boîtier en fonction du montant le long duquel on souhaite pouvoir faire arriver et repartir les câbles dudit dispositif, et donc autour duquel on souhaite pouvoir faire pivoter le dispositif pour sortir ledit dispositif.

Cependant, avec la solution décrite dans la demande de brevet FR2959383, l'opérateur doit, avant d'introduire le boîtier dans la structure d'accueil, déterminer autour de quel montant il souhaite que le boîtier puisse pivoter pour déterminer le côté du boîtier qu'il doit équiper de la charnière. L'opérateur fixe ensuite l'organe de verrouillage de l'autre côté du boîtier. Après avoir fixé la charnière et l'organe de verrouillage sur le boîtier, l'opérateur introduit ledit boîtier ainsi équipé entre les deux montants de la face d'introduction de la structure d'accueil et fixe la charnière au montant correspondant.

Si l'opérateur souhaite finalement pouvoir faire pivoter le dispositif autour de l'autre montant, il doit non seulement démonter la fixation de la charnière au montant mais également démonter la fixation de la charnière au dispositif pour la remonter de l'autre côté dudit dispositif.

La présente invention a pour but de proposer un dispositif de connexion et/ou de stockage de câbles permettant à l'opérateur de monter le boîtier dudit dispositif dans la structure d'accueil avec une mobilité de pivotement autour de l'un ou l'autre des montants de la face d'introduction, tout en permettant de réduire le temps d'intervention de l'opérateur et de réaliser un tel montage avec un nombre d'opérations réduit.

Un autre but de l'invention est de permettre à l'opérateur, qui change d'avis concernant le montant à sélectionner pour faire pivoter le dispositif, de pouvoir fixer à pivotement le dispositif sur ce nouveau montant avec un nombre réduit de manipulations et sans avoir à extraire le boîtier de la structure d'accueil.

A cet effet, l'invention a pour objet un dispositif de connexion et/ou de stockage de câbles, en particulier pour terminaisons de câbles à fibre optique, destiné à être monté dans une structure d'accueil présentant une face d'introduction qui s'étend entre deux montants de ladite structure d'accueil,
ledit dispositif de connexion et/ou de stockage de câbles comprenant un boîtier présentant deux côtés opposés qui sont respectivement situés, à l'état introduit du boîtier dans ladite structure d'accueil, à proximité des montants correspondants de la face d'introduction de ladite structure d'accueil, **caractérisé en ce que** chacun desdits côtés opposés du boîtier est équipé d'une charnière,
et en ce que lesdites charnières sont, indifféremment l'une et l'autre, aptes à recevoir, l'une, des moyens de fixation au montant correspondant de ladite structure d'accueil pour permettre audit dispositif de pivoter autour dudit montant entre une position rangée à l'intérieur de ladite structure d'accueil et une position sortie à l'extérieur de ladite structure d'accueil,
et, l'autre, des moyens de verrouillage par rapport à l'autre montant, activables/désactivables manuellement.

Une telle conception d'un boîtier muni de charnières pour lesquelles il est possible de positionner, indifféremment sur l'une ou l'autre desdites charnières, des moyens de fixation à un montant ou des moyens de verrouillage, permet à l'opérateur de fixer une charnière sur le montant, dit montant de pivotement, autour duquel il souhaite pouvoir faire pivoter le dispositif, et d'équiper l'autre charnière desdits moyens de verrouillage pour permettre de verrouiller le dispositif en position rangée dans la structure d'accueil et de le déverrouiller manuellement pour autoriser le passage du dispositif de sa position rangée à sa position sortie à l'extérieur de la structure d'accueil.

La présence des deux charnières permet à l'opérateur de répartir comme il le souhaite les moyens de fixation et les moyens de verrouillage correspondant en fonction du montant autour duquel il souhaite pouvoir faire pivoter ledit dispositif. Une telle solution permet de réduire le temps d'intervention de l'opérateur.

En pratique, l'opérateur peut introduire le boîtier équipé de ses charnières dans la structure sans se soucier du montant de pivotement à sélectionner. Une fois introduit ledit boîtier il peut sélectionner l'un ou l'autre desdits montants en tant que montant de pivotement et fixer la charnière correspondante sur ledit montant sélectionné. Il lui suffit alors d'équiper l'autre charnière des moyens de verrouillage.

Autrement dit, grâce aux deux charnières et aux moyens de fixation et de verrouillage correspondant, l'opérateur peut conserver la fonctionnalité de la charnière proche du montant de pivotement sélectionné et transformer l'autre charnière en patte de verrouillage.

Si l'opérateur souhaite finalement pouvoir faire pivoter le dispositif autour de l'autre montant, il lui suffit d'inverser les moyens de fixation et de verrouillage, sans qu'il soit nécessaire de démonter les charnières par rapport au boîtier.

Une telle conception du dispositif selon l'invention permet un montage encore plus aisé du boîtier dans l'armoire en laissant le choix à l'opérateur du sens de pivotement du boîtier pour son passage de la position rangée à la position sortie. L'opérateur peut donc très facilement adapter le montage du boîtier dans l'armoire en fonction du montant le long duquel les câbles associés au boîtier sont destinés à cheminer.

Enfin, l'opérateur peut, avec un seul modèle de dispositif, choisir le montant le long duquel il souhaite faire cheminer le ou les câbles associés audit dispositif et ainsi équilibrer facilement et rapidement la répartition des câbles associés aux dispositifs le long des deux montants.

Selon une caractéristique avantageuse de l'invention, chaque charnière se présentant sous la forme d'une pièce fixe par rapport au boîtier et d'une pièce articulée par rapport à ladite pièce fixe, ladite pièce fixe de chaque charnière est formée d'une seule pièce avec le corps du boîtier.

Une telle conception du boîtier et des charnières équipant ce boîtier limite le nombre de pièces à rapporter sur le corps du boîtier, ce qui réduit le cout de fabrication du dispositif selon l'invention.

Selon une caractéristique avantageuse de l'invention, ladite autre charnière est apte à recevoir une butée de limitation d'articulation de ladite autre charnière.

Une telle butée permet de désactiver l'articulation de la charnière qui reçoit les moyens de verrouillage. Ainsi, l'opérateur n'est pas gêné par l'articulation de la charnière pour déverrouiller ou reverrouiller le boîtier par rapport au montant de fermeture.

Selon une caractéristique avantageuse de l'invention, le boîtier présente une paroi avant qui délimite avec ladite autre charnière un passage latéral de sortie de câble apte à être obturé par ladite butée de limitation d'articulation.

La butée de limitation d'articulation permet, d'une part, de désactiver l'articulation de ladite autre charnière qui reçoit l'organe de verrouillage puisqu'elle est ainsi utilisée en tant que patte de verrouillage et non plus en tant que charnière articulée et, d'autre part, de fermer le passage de sortie de câble associé à cette charnière puisque les câbles doivent alors sortir par l'autre passage associé à la charnière opposée située du côté du montant de pivotement. Ladite butée présente ainsi une fonction de détrompage de sortie de câble.

Selon une caractéristique avantageuse de l'invention, chaque charnière comprend au moins un orifice permettant le passage desdits moyens de fixation, tels qu'une vis, et un autre orifice permettant le passage desdits moyens de verrouillage, tels qu'une goupille à blocage automatique.

Avantageusement, les orifices de passage desdits moyens de fixation et les orifices de passage desdits moyens de verrouillage sont de forme et/ou de diamètres différents pour faciliter leur identification par l'opérateur.

L'invention concerne également une installation comprenant une structure d'accueil présentant une face d'introduction qui s'étend entre deux montants de ladite structure, et au moins un dispositif de connexion et/ou de stockage de câbles introduit entre les deux montants,
**caractérisé en ce que** ledit dispositif est tel que décrit ci-dessus, l'une desdites charnières étant fixée par lesdits moyens de fixation au montant correspondant, dit montant de pivotement, de la structure, et l'autre charnière étant munie desdits moyens de verrouillage qui permettent de verrouiller et déverrouiller manuellement ladite autre charnière par rapport à l'autre montant de la structure, appelé montant de fermeture.

Selon une caractéristique avantageuse de l'invention, lesdits moyens de verrouillage activables/désactivables manuellement comprennent un organe de verrouillage, qui traverse un orifice ménagé dans ladite autre charnière, et qui est apte, en position rangée du dispositif, à se verrouiller dans un orifice dudit montant de fermeture.

Selon une caractéristique avantageuse de l'invention, les moyens de fixation de ladite charnière au montant de pivotement comprennent au moins une vis vissée, à travers un orifice de ladite charnière, dans un orifice dudit montant de pivotement.

L'invention concerne également un procédé de montage d'un dispositif de connexion et/ou de stockage de câbles, en particulier pour terminaisons de câbles à fibre optique, dans une structure d'accueil présentant une face d'introduction qui s'étend entre deux montants de ladite structure,
**caractérisé en ce que** ledit dispositif est tel que décrit ci-dessus, et le procédé comprend les étapes suivantes :
- introduction du dispositif de connexion et/ou de stockage de câbles entre les deux montants de ladite structure,
- fixation de l'une desdites charnières sur l'un desdits montants, dit montant de pivotement, autour duquel on souhaite pouvoir faire pivoter le dispositif,
- mise en place sur l'autre charnière desdits moyens de verrouillage activables/désactivables manuellement pour permettre le verrouillage de ladite autre charnière sur l'autre montant, dit montant de fermeture.

Selon une caractéristique avantageuse de l'invention, ledit procédé comprend en outre une étape de fixation sur ladite autre charnière d'une butée de limitation d'articulation de ladite autre charnière.

L'invention sera bien comprise à la lecture de la description suivante d'exemples de réalisation, en référence aux dessins annexés dans lesquels :
- la figure 1 est une vue en perspective du corps du boîtier et des charnières d'un dispositif de connexion et/ou de stockage de câbles selon l'invention ;
- la figure 2 est une vue éclatée d'une structure d'accueil et d'un dispositif selon l'invention, dans une configuration selon laquelle ledit dispositif est apte à pivoter autour du montant droit de la structure;
- la figure 3 est une vue du dispositif de la figure 2 équipé d'une cassette de passage de câble relevée, et d'un bandeau de connexion de terminaison de câbles;

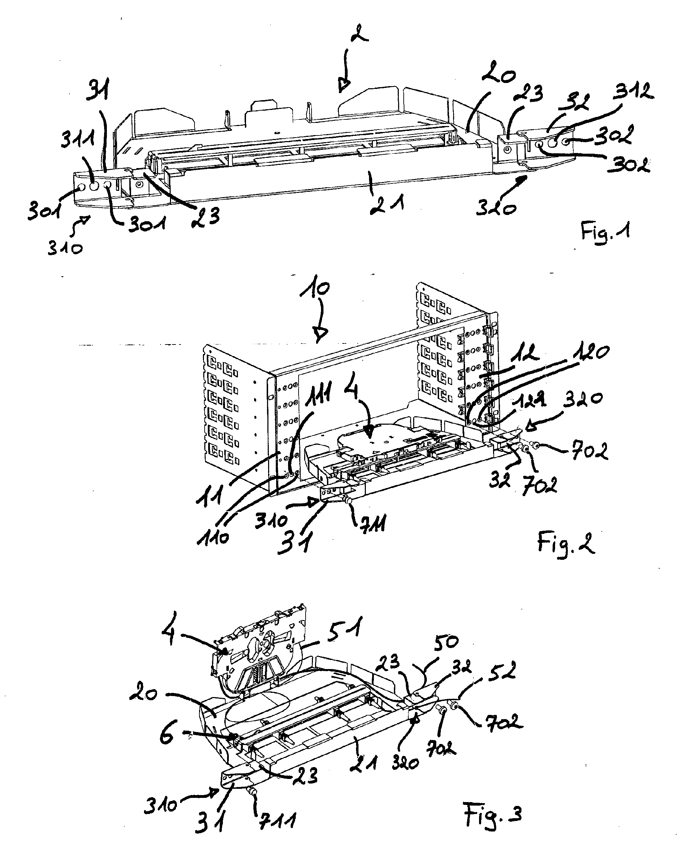

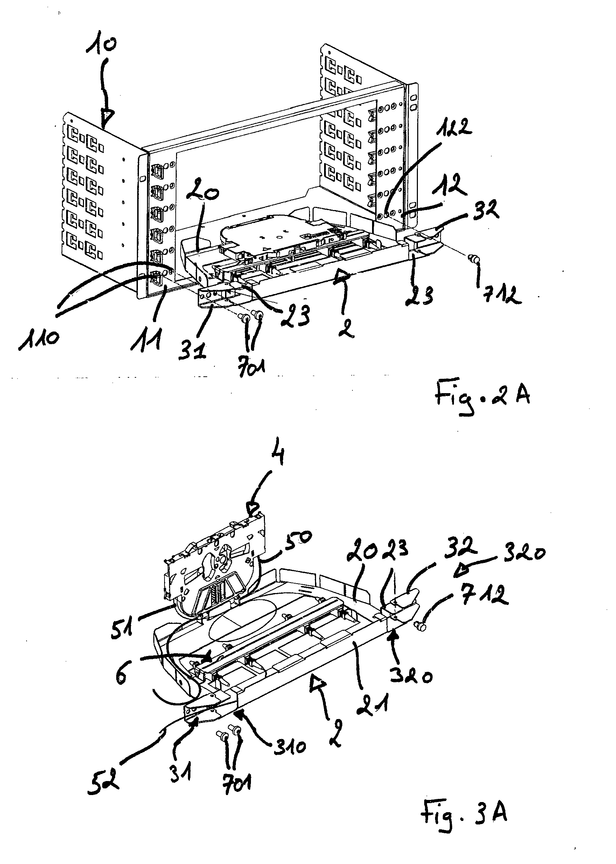

- la figure 2A est une vue éclatée de la structure d'accueil et du dispositif de connexion selon l'invention dans une configuration pour laquelle ledit dispositif est apte à pivoter autour du montant gauche de la structure ;
- la figure 3A est une vue du dispositif de la figure 2A équipé d'une cassette de passage de câbles relevée, et d'un bandeau de connexion de terminaison de câbles;

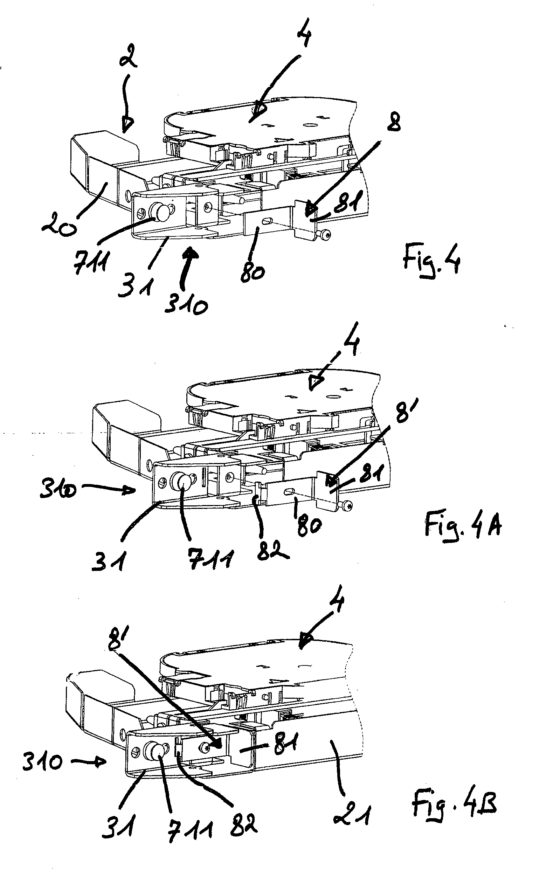

- la figure 4 est une vue de détail de la partie gauche du dispositif selon l'invention, montrant en éclaté l'assemblage de la charnière munie de l'organe de verrouillage avec une butée d'articulation selon un premier mode de réalisation ;
- la figure 4A est une vue de détail de la partie gauche du dispositif selon l'invention, montrant en éclaté l'assemblage de la charnière munie de l'organe de verrouillage avec une butée d'articulation selon un deuxième mode de réalisation ;
- la figure 4B est une vue à l'état assemblé de la butée d'articulation et de la charnière du dispositif de la figure 4A ;

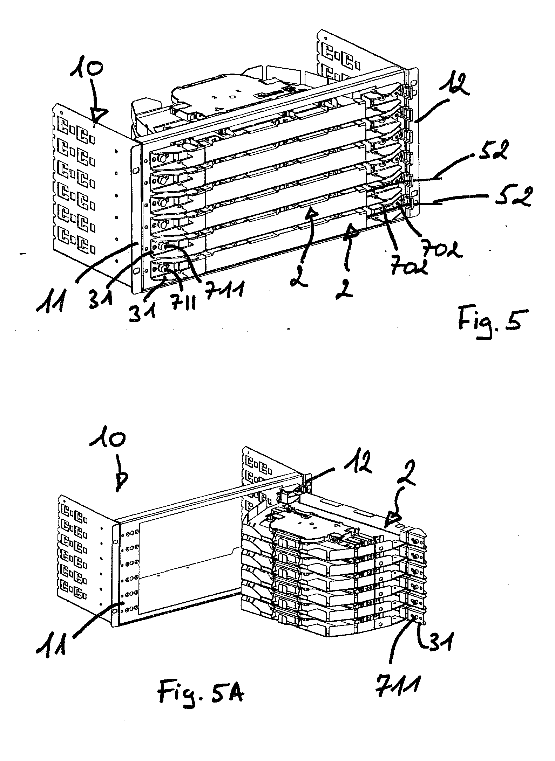

- la figure 5 est une vue en perspective d'une structure d'accueil équipée de plusieurs dispositifs de connexion et/ou de stockage de câbles selon l'invention, montés pivotant sur le montant droit de la structure d'accueil ;
- la figure 5A est une vue de la structure d'accueil et des dispositifs de connexion et/ou de stockage de câbles de la figure 5 en position sortie desdits dispositifs par pivotement autour dudit montant droit de la structure d'accueil.

En référence aux figures et comme rappelé ci-dessus, l'invention concerne un dispositif utilisé pour connecter des câbles et/ou pour stocker des surlongueurs de câbles, en particulier pour terminaisons de câbles à fibre optique.

Le dispositif de connexion et/ou de stockage est destiné à être monté dans une structure d'accueil 10 présentant une face d'introduction qui s'étend entre deux montants 11, 12 de ladite structure.

Par référence à une configuration selon laquelle l'opérateur est situé en regard de la face d'introduction de la structure d'accueil 10, les montants 11 et 12 sont respectivement désignés comme étant les montants gauche et droit de ladite structure.

Comme illustré aux figures 5 et 5A, la structure 10 est destinée à loger une pluralité de dispositifs 2 superposés pour former une baie de dispositifs.

Dans l'exemple illustré aux figures, ladite structure d'accueil est une ossature appelée tête qui comprend six étages d'accueil de dispositif de connexion et/ou de stockage de câbles. Chaque dispositif peut recevoir 24 câbles de sorte que la tête permet de recevoir 144 câbles. La tête 10 est elle-même destinée à être montée dans une armoire de plus grande dimension qui présente aussi une face d'introduction qui s'étend entre deux montants. Selon une variante non représentée, on peut prévoir que l'armoire forme directement la structure d'accueil des dispositifs.

Comme illustré à la figure 1, ledit dispositif 2 de connexion et/ou de stockage de câbles comprend un boîtier 20 présentant deux côtés opposés dits respectivement gauche et droit. Le côté gauche, respectivement droit, du boîtier est situé, à l'état introduit du boîtier 20 dans ladite structure d'accueil 10, à proximité du montant gauche 11, respectivement droit 12 de la face d'introduction de ladite structure d'accueil 10 (voir figures 2 et 2A).

Plus précisément, lesdits côtés opposés du boîtier sont situés de part et d'autre d'un plan orthogonal aux faces supérieure et inférieure, ainsi qu'aux faces avant et arrière du boîtier. La face avant du boîtier 20 correspond, en position rangée du boîtier 20, à la face du boîtier 20 qui s'étend sensiblement parallèlement au plan passant par les montants 11, 12 de la face d'introduction.

Ledit boîtier 20, encore appelé plateau, est d'épaisseur ou hauteur inférieure aux dimensions de largeur et de longueur dudit boîtier.

Le montant de la face d'introduction de l'armoire autour duquel est monté pivotant le boîtier du dispositif de connexion est appelé montant de pivotement. Le boîtier 20 peut pivoter autour dudit montant de pivotement, entre une position rangée à l'intérieur de l'armoire 10 et une position sortie à l'extérieur de l'armoire 10. Comme détaillé ci-après, l'autre montant, opposé au montant de pivotement, est appelé montant de fermeture.

Chacun desdits côtés gauche et droit du boîtier 20 est équipé d'une charnière 310,320.

Chacune desdites charnières 310,320 comprend au moins un orifice 301, 302 permettant à l'opérateur d'équiper l'une ou l'autre charnière avec des moyens de fixation 701, 702 pour fixer la charnière sélectionnée au montant correspondant de ladite structure d'accueil 10 afin de permettre audit dispositif 2 de pivoter autour dudit montant entre une position rangée à l'intérieur de l'armoire et une position sortie à l'extérieur de l'armoire.

Chacune desdites charnières 310, 320 comprend au moins un autre orifice 311, 312, de préférence distinct dudit au moins un orifice 301, 302 de réception des moyens de fixation, qui permet à l'opérateur d'équiper la charnière dépourvue desdits moyens de fixation, avec des moyens de verrouillage 711 ; 712 permettant de verrouiller le dispositif 2 en position rangée dans ladite structure d'accueil 10 par rapport au montant 11, 12 correspondant.

Le montant "correspondant" à une charnière est le montant situé à proximité immédiate de cette charnière.

Lesdits moyens de verrouillage 711 ; 712 sont activables/désactivables manuellement pour permettre de verrouiller le dispositif 2 en position rangée dans ladite structure d'accueil 10, et de le déverrouiller afin de lui permettre de passer en position sortie de ladite structure d'accueil.

Dans l'exemple illustré aux figures, les moyens de verrouillage comprennent un organe de déverrouillage qui est un bouton de type push-pull, encore appelé goupille à blocage automatique, de type déformable par appui sur la tête de l'organe de verrouillage pour libérer ou introduire l'organe de verrouillage dans le montant de fermeture. Une fois introduit dans le montant de fermeture, le relâchement de l'organe de verrouillage lui permet de former une butée anti-extraction par rapport au montant.

Lesdits moyens de fixation 702 ; 701, par exemple de type vis, sont non démontables manuellement, c'est-à-dire qu'ils nécessitent un outil tel qu'un tournevis pour le démontage de la charnière correspondante par rapport au montant 12 ; 11 de pivotement, par opposition aux moyens de verrouillage manuels 711, 712 qu'il suffit de solliciter manuellement pour les activer ou les désactiver et ainsi verrouiller ou libérer la charnière correspondante par rapport au montant de fermeture.

Comme rappelé ci-dessus, les moyens de fixation de la charnière à la structure d'accueil, de même que les moyens de verrouillage de l'autre charnière à la structure d'accueil, sont positionnables indifféremment sur l'une ou l'autre desdites charnières.

Ainsi, l'opérateur peut décider de fixer l'une des charnières à un montant autour duquel il souhaite pouvoir faire pivoter le dispositif correspondant et d'équiper l'autre charnière avec les moyens de verrouillage pour permettre de verrouiller le dispositif par rapport à l'autre montant en position rangée dudit dispositif.

Le boîtier 20 présente une paroi avant 21 qui délimite avec chaque charnière 310, 320 un passage latéral de sortie de câble.

Chaque charnière 310, 320 se présente sous la forme d'une pièce fixe 23 par rapport au boîtier 20 et d'une pièce 31, 32 articulée par rapport à ladite pièce fixe 23.

Dans l'exemple illustré plus particulièrement aux figures 2 et 3, la pièce articulée 32 de la charnière 320 comprend deux orifices 302 permettant le passage de vis, formant lesdits moyens de fixation 702, qui se fixent dans des orifices 120 du montant 12 de la structure 10. La pièce articulée 31 de la charnière 310 comprend un autre orifice 311 permettant le passage d'une goupille à blocage automatique, formant lesdits moyens de verrouillage 711, qui se verrouille dans un orifice 111 du montant 11 de la structure 10. Un simple appui sur la tête de la goupille permet de déverrouiller la charnière correspondante par rapport au montant 11.

Dans l'exemple illustré plus particulièrement aux figures 1, 2A et 3A, la pièce articulée 31 de la charnière 310 comprend deux orifices 301 permettant le passage de vis, formant lesdits moyens de fixation 701, qui se fixent dans des orifices 110 du montant 11 de la structure 10. La pièce articulée 32 de la charnière 320 comprend un autre orifice 312 permettant le passage d'une goupille à blocage automatique, formant lesdits moyens de verrouillage 712, qui se verrouille dans un orifice 122 du montant 12 de la structure 10. Un simple appui sur la tête de la goupille permet de déverrouiller la charnière correspondante par rapport au montant 12.

Comme illustré à la figure 4, chaque charnière 310, 320 est apte à recevoir une butée 8 qui limite ou empêche le pivotement de la pièce articulée de la charnière par rapport à la pièce fixe de ladite charnière. Ladite butée 8 se présente sous la forme d'une plaquette 80 dont une extrémité 81 est repliée à angle droit pour fermer le passage latéral de sortie de câble délimité entre la paroi avant 21 du boîtier et cette charnière.

La butée 8 comprend des moyens de fixation par vissage sur la pièce fixe 23 de la charnière. La butée 8 empêche la pièce mobile 31 de la charnière 310 de pivoter par rapport à la pièce fixe 23. La butée 8' illustrée aux figures 4A et 4B se différencie de la butée 8 par son extrémité, opposée à celle fermant le passage de sortie de câble, qui est pliée à angle droit en sens inverse de l'autre extrémité. Ce pli est apte à être engagé dans une fente ménagée dans la pièce mobile de la charnière.

Dans l'exemple illustré aux figures, ladite pièce fixe 23 de chaque charnière est formée d'une seule pièce avec le corps du boîtier 20.

Le procédé de montage d'un ou de chaque dispositif tel que décrit ci-dessus dans une structure d'accueil 10 présentant une face d'introduction s'étendant entre deux montants 11, 12 de l'armoire, peut s'effectuer de la manière suivante.

L'opérateur introduit le dispositif 2 de connexion et/ou de stockage de câbles entre les deux montants 11, 12 de ladite structure, de manière à appliquer la pièce mobile 31, 32 des charnières 310, 320 contre la face avant des montants 11, 12. Lors de cette étape, l'opérateur n'a pas à se préoccuper du montant 11, 12 le long duquel les câbles du dispositif vont être acheminés. Chaque dispositif est pré-équipé en usine des deux charnières.

Une fois introduit ledit boîtier 20 équipé des deux charnières 310, 320 dans la structure d'accueil, l'opérateur peut alors choisir le montant 11 ou 12 le long duquel il souhaite faire cheminer les câbles, ce qui correspondant au montant autour duquel le dispositif doit pouvoir pivoter pour être sorti de la structure sans détériorer les câbles.

Selon le mode de réalisation illustré aux figures 2, 3, 5 et 5A, l'opérateur fixe la pièce articulée 32 de la charnière 320 au montant de droite 12 pour permettre au boîtier de pivoter autour dudit montant de droite 12 et d'acheminer les câbles le long dudit montant de droite 12. A cet effet, il visse les vis 702 à travers les orifices 302 de la pièce mobile 32 de la charnière et les orifices 120 du montant 12.

L'opérateur fixe sur la pièce articulée 31 de l'autre charnière 310, opposée à la charnière 320, l'organe de verrouillage 711 activable/désactivable manuellement pour permettre le verrouillage de ladite autre charnière 310 sur le montant 11 gauche en position rangée du dispositif.

Préférentiellement, l'opérateur fixe aussi sur ladite autre charnière 310 munie de l'organe de verrouillage 711, une butée 8 ou 8' de limitation d'articulation comme expliqué ci-dessus.

L'opérateur peut alors acheminer un câble d'entrée 50 par une entrée ménagée dans le boîtier du côté du montant de pivotement et un câble de sortie 52 qui ressort par le passage délimité entre la face avant 21 et la charnière 32 située du côté du montant de pivotement 12, de sorte que les câbles puissent cheminer le long du montant de pivotement. Les câbles d'entrée et de sortie sont destinés à être raccordés entre eux à l'intérieur du boîtier par exemple à l'aide d'un bandeau de connexion 6 comme illustré plus particulièrement aux figures 3 et 3A.

Inversement, selon le mode de réalisation illustré aux figures 2A et 3A, l'opérateur peut monter le boitier 20 du dispositif 2 pivotant autour du montant gauche 11 et, en position rangée, le verrouiller sur le montant droit 12.

Dans l'exemple illustré plus particulièrement aux figures 3 et 3A, le boîtier comprend en amont du bandeau de connexion 6, une cassette 4 de câbles qui permet de raccorder un câble d'entrée 50 à un câble intermédiaire 51 lui-même raccordé au câble de sortie 52 par l'intermédiaire dudit bandeau de connexion 6.

Selon différents modes de réalisation, le boîtier est équipé de moyens d'enroulement de câbles permettant d'enrouler et de dérouler le ou les câbles passant par le boîtier en fonction de la longueur souhaitée. Dans ce cas le boîtier est avantageusement équipé de moyens de raccordement par soudure des terminaisons de câbles provenant de l'entrée du boîtier avec des terminaisons de câbles provenant de la sortie du boîtier.

Les câbles sont de préférence des câbles à fibre optique et relient entre eux des équipements émetteurs et des équipements récepteurs.

Une telle installation selon l'invention permet, si l'opérateur le souhaite, de fixer la charnière d'un premier dispositif sur l'un des montants de la face d'introduction de la structure d'accueil pour le faire pivoter autour de ce montant, et la charnière d'un deuxième dispositif sur l'autre montant de la face d'introduction pour le faire pivoter autour de cet autre montant, ce qui permet d'équilibrer la répartition des câbles le long des deux montants de la structure d'accueil.

La présente invention n'est nullement limitée aux modes de réalisation décrits et représentés, mais l'homme du métier saura y apporter toute variante conforme aux revendications.

## Revendications

1. Dispositif (2) de connexion et/ou de stockage de câbles, en particulier pour terminaisons de câbles à fibre optique, destiné à être monté dans une structure d'accueil (10) présentant une face d'introduction qui s'étend entre deux montants (11, 12) de ladite structure d'accueil,
ledit dispositif (2) de connexion et/ou de stockage de câbles comprenant un boîtier (20) présentant deux côtés opposés qui sont respectivement situés, à l'état introduit du boîtier (20) dans ladite structure d'accueil (10), à proximité des montants correspondants de la face d'introduction de ladite structure d'accueil (10),
**caractérisé en ce que** chacun desdits côtés opposés du boîtier (20) est équipé d'une charnière (310, 320),
et **en ce que** lesdites charnières (310, 320) sont, indifféremment l'une et l'autre, aptes à recevoir, l'une (320 ; 310), des moyens de fixation (702, 701) au montant (12 ; 11) correspondant de ladite structure d'accueil (10) pour permettre audit dispositif (2) de pivoter autour dudit montant (12 ;11) entre une position rangée à l'intérieur de ladite structure d'accueil (10) et une position sortie à l'extérieur de ladite structure d'accueil (10),
et, l'autre (310 ; 320), des moyens de verrouillage (711 ; 712) par rapport à l'autre montant (11 ; 12), activables/désactivables manuellement.

2. Dispositif (2) de connexion et/ou de stockage de câbles selon la revendication 1, **caractérisé en ce que** chaque charnière (310, 320) se présentant sous la forme d'une pièce fixe (23) par rapport au boîtier (20) et d'une pièce (31 ; 32) articulée par rapport à ladite pièce fixe (23), ladite pièce fixe (23) de chaque charnière est formée d'une seule pièce avec le corps du boîtier (20).

3. Dispositif (2) de connexion et/ou de stockage de câbles selon l'une des revendications précédentes, **caractérisé en ce que** ladite autre charnière (310 ; 320) est apte à recevoir une butée (8 ; 8') de limitation d'articulation de ladite autre charnière (310, 320).

4. Dispositif (2) de connexion et/ou de stockage de câbles selon la revendication 3, **caractérisé en ce que** le boîtier (20) présente une paroi avant (21) qui délimite avec ladite autre charnière (310, 320) un passage latéral de sortie de câble apte à être obturé par ladite butée (8 ; 8') de limitation d'articulation.

5. Dispositif (2) de connexion et/ou de stockage de câbles selon l'une des revendications précédentes, **caractérisé en ce que** chaque charnière (310, 320) comprend au moins un orifice (301 ; 302) permettant le passage desdits moyens de fixation (701 ; 702), tels qu'une vis, et un autre orifice (311 ; 312) permettant le passage desdits moyens de verrouillage (711 ; 712), tels qu'une goupille à blocage automatique.

6. Installation comprenant une structure (10) d'accueil présentant une face d'introduction qui s'étend entre deux montants (11 ; 12) de ladite structure, et au moins un dispositif (2) de connexion et/ou de stockage de câbles introduit entre les deux montants (11, 12),
**caractérisée en ce que** ledit dispositif (2) est conforme à l'une des revendications 1 à 5,
l'une (320 ; 310) desdites charnières étant fixée par lesdits moyens de fixation (702 ; 701) au montant (12 ; 11) correspondant, dit montant de pivotement, de la structure, et l'autre charnière (310 ; 320) étant munie desdits moyens de verrouillage (711 ; 712) qui permettent de verrouiller et déverrouiller manuellement ladite autre charnière (310 ; 320) par rapport à l'autre montant (11 ; 12) de la structure, appelé montant de fermeture.

7. Installation selon la revendication 6, **caractérisée en ce que** lesdits moyens de verrouillage (711 ; 712) activables/désactivables manuellement comprennent un organe de verrouillage, qui traverse un orifice (311 ; 312) ménagé dans ladite autre charnière (310 ; 320), et qui est destiné, en position rangée du dispositif (2), à venir se verrouiller dans un orifice (111 ; 122) dudit montant (11 ; 12) de fermeture.

8. Installation selon l'une des revendications 6 ou 7, **caractérisée en ce que** les moyens de fixation (702 ; 701) de ladite charnière (32 ; 31) au montant de pivotement (12 ; 11) comprennent au moins une vis vissée, à travers un orifice (302 ; 301) de ladite charnière (320 ; 310), dans un orifice (120 ; 110) dudit montant (12 ; 11) de pivotement.

9. Procédé de montage d'un dispositif (2) de connexion et/ou de stockage de câbles, en particulier pour terminaisons de câbles à fibre optique, dans une structure d'accueil (10) présentant une face d'introduction qui s'étend entre deux montants (11, 12) de ladite structure,
**caractérisé en ce que** ledit dispositif (2) est conforme à l'une des revendications 1 à 5,
et **en ce que** le procédé comprend les étapes suivantes :
- introduction du dispositif (2) de connexion et/ou de stockage de câbles entre les deux montants (11, 12) de ladite structure,
- fixation de l'une (320 ; 310) desdites charnières sur l'un (12 ; 11) desdits montants, dit montant de pivotement, autour duquel on souhaite pouvoir faire pivoter le dispositif (2),
- mise en place sur l'autre charnière (310 ; 320) desdits moyens de verrouillage (711 ; 712) activables/désactivables manuellement pour permettre le verrouillage de ladite autre charnière (310 ; 320) sur l'autre montant (11 ; 12), dit montant de fermeture.

10. Procédé de montage selon la revendication 9, **caractérisé en ce que** ledit procédé comprend en outre une étape de fixation sur ladite autre charnière (310 ; 320) d'une butée (8 ; 8') de limitation d'articulation de ladite autre charnière (310, 320).

## Patentansprüche

1. Anschluss- und/oder Lagervorrichtung (2) von Kabeln, insbesondere für Enden von Glasfaserkabeln, die zur Montage in einer Empfangsstruktur (10) bestimmt sind, die eine sich zwischen zwei Pfosten (11, 12) der Empfangsstruktur erstreckende Einführungsseite aufweist,
wobei die Anschluss- und/oder Lagervorrichtung (2) von Kabeln ein Gehäuse (20) umfasst, das zwei gegenüberliegende Seiten aufweist, die sich jeweils im in die Empfangsstruktur (10) eingeführten Zustand des Gehäuses (20) in der Nähe der entsprechenden Pfosten der Einführungsseite der Empfangsstruktur (10) befinden,
**dadurch gekennzeichnet, dass** jede der gegenüberliegenden Seiten des Gehäuses (20) mit einem Scharnier (310, 320) ausgestattet ist,
und dass die Scharniere (310, 320) unterschiedslos voneinander imstande sind, das eine (320; 310), Befestigungsmittel (702, 701) am entsprechenden Pfosten (12; 11) der Empfangsstruktur (10) aufzunehmen, um der Vorrichtung (2) zu erlauben, um den Pfosten (12;11) zwischen einer in der Empfangsstruktur (10) untergebrachten Stellung und einer aus der Empfangsstruktur (10) herausgeführten Stellung zu schwenken,
und, das andere (310; 320), manuell aktivierbare/deaktivierbare Verriegelungsmittel (711; 712) im Verhältnis zum andere Pfosten (11; 12).

2. Anschluss- und/oder Lagervorrichtung (2) von Kabeln nach Anspruch 1, **dadurch gekennzeichnet, dass** sich jedes Scharnier (310, 320) im Verhältnis zum Gehäuse (20) in Form eines starren Teils (23) und im Verhältnis zum starren Teil (23) in Form eines Gelenkteils (31; 32) darstellt, wobei das starre Teil (23) jedes Scharniers mit dem Körper des Gehäuses (20) aus einem einzigen Teil geformt ist.

3. Anschluss- und/oder Lagervorrichtung (2) von Kabeln nach einem der vorangehenden Ansprüche, **dadurch gekennzeichnet, dass** das andere Scharnier (310; 320) imstande ist, einen Gelenkbegrenzungsanschlag (8; 8') des anderen Scharniers (310, 320) aufzunehmen.

4. Anschluss- und/oder Lagervorrichtung (2) von Kabeln nach Anspruch 3, **dadurch gekennzeichnet, dass** das Gehäuse (20) eine Vorderwand (21) aufweist, die mit dem anderen Scharnier (310, 320) einen seitlichen Kabeldurchgangsausgang begrenzt, der imstande ist, von dem Gelenkbegrenzungsanschlag (8; 8') verdeckt zu sein.

5. Anschluss- und/oder Lagervorrichtung (2) von Kabeln nach einem der vorangehenden Ansprüche, **dadurch gekennzeichnet, dass** jedes Scharnier (310, 320) mindestens eine Öffnung (301; 302) umfasst, die den Durchgang der Befestigungsmittel (701; 702), wie einer Schraube, erlaubt, und eine andere Öffnung (311; 312), die den Durchgang der Verriegelungsmittel (711; 712), wie eines automatischen Blockierstifts, erlaubt.

6. Ausrüstung, die eine Empfangsstruktur (10) umfasst, die eine sich zwischen zwei Pfosten (11; 12) der Struktur erstreckende Einführungsseite und mindestens eine zwischen die zwei Pfosten (11, 12) eingeführte Anschluss- und/oder Lagervorrichtung (2) von Kabeln aufweist,
**dadurch gekennzeichnet, dass** die Vorrichtung (2) einem der Ansprüche 1 bis 5 entspricht,
wobei eines (320; 310) der Scharniere anhand der Befestigungsmittel (702; 701) am entsprechenden Pfosten (12; 11), Schwenkpfosten genannt, der Struktur befestigt ist, und das andere Scharnier (310; 320) mit den Verriegelungsmitteln (711; 712) ausgestattet ist, die erlauben, das andere Scharnier (310; 320) im Verhältnis zum anderen Pfosten (11; 12) der Struktur, Verschluss-Pfosten genannt, manuell zu verriegeln und zu entriegeln.

7. Ausrüstung nach Anspruch 6, **dadurch gekennzeichnet, dass** die manuell aktivierbaren/ deaktivierbaren Verriegelungsmittel (711; 712) ein Verriegelungsorgan umfassen, das eine in das andere Scharnier (310; 320) eingearbeitete Öffnung (311; 312) durchquert und das in der untergebrachten Stellung der Vorrichtung (2) dazu bestimmt ist, sich in einer Öffnung (111; 122) des Verschluss-Pfostens (11; 12) zu verriegeln.

8. Ausrüstung nach einem der Ansprüche 6 oder 7, **dadurch gekennzeichnet, dass** die Befestigungsmittel (702; 701) des Scharniers (32; 31) am Schwenkpfosten (12; 11) mindestens eine durch eine Öffnung (302; 301) des Scharniers (320; 310) in eine Öffnung (120; 110) des Schwenkpfostens (12; 11) geschraubte Schraube umfassen.

9. Montageverfahren einer Anschluss- und/oder Lagervorrichtung (2) von Kabeln, insbesondere für Enden von Glasfaserkabeln, in einer Empfangsstruktur (10), die eine sich zwischen zwei Pfosten (11, 12) der Struktur erstreckende Einführungsseite aufweist,
**dadurch gekennzeichnet, dass** die Vorrichtung (2) einem der Ansprüche 1 bis 5 entspricht,
und dass das Verfahren die folgenden Schritte umfasst:
- Einführen der Anschluss- und/oder Lagervorrichtung (2) von Kabeln zwischen die zwei Pfosten (11, 12) der Struktur,
- Befestigen des einen (320; 310) der Scharniere an einem (12; 11) der Pfosten, Schwenkpfosten genannt, um den die Vorrichtung (2) schwenken können soll,
- Positionieren der manuell aktivierbaren /deaktivierbaren Verriegelungsmittel (711; 712) auf dem anderen Scharnier (310; 320), um die Verriegelung des anderen Scharniers (310; 320) auf dem anderen Pfosten (11; 12), Verschluss-Pfosten genannt, zu erlauben.

10. Montageverfahren nach Anspruch 9, **dadurch gekennzeichnet, dass** das Verfahren ferner einen Befestigungsschritt eines Gelenkbegrenzungsanschlag (8; 8') des anderen Scharniers (310, 320) auf dem anderen Scharnier (310; 320) umfasst.

## Claims

1. A device (2) for connecting and/or storing cables, in particular for fiber-optic cable terminations, intended to be mounted in a receiving structure (10) having an insertion face that extends between two posts (11, 12) of said receiving structure,
said device (2) for connecting and/or storing cables comprising a housing (20) having two opposite sides that are respectively situated, in the state of the housing (20) inserted into said receiving structure (10), near corresponding posts of the face for inserting said receiving structure (10),
**characterized in that** each of said opposite sides of the housing (20) is equipped with a hinge (310, 320),
and **in that** regarding said hinges (310, 320), indifferently with respect to one another, one (320; 310) is capable of receiving fastening means (702, 701) for fastening to the corresponding post (12; 11) of said receiving structure (10) to allow said device (2) to pivot around said post (12; 11) between a position stored inside said receiving structure (10) and a deployed position outside said receiving structure (10),
and the other (310; 320) is capable of receiving the locking means (711; 712) for locking relative to the other post (11; 12), which can be activated/deactivated manually.

2. The device (2) for connecting and/or storing cables according to claim 1, **characterized in that** each hinge (310, 320) assuming the form of a stationary piece (23) relative to the housing (20) and a piece (31; 32) that is articulated relative to said stationary piece (23), said stationary piece (23) of each hinge is formed in a single piece with the body of the housing (20).

3. The device (2) for connecting and/or storing cables according to one of the preceding claims, **characterized in that** said other hinge (310; 320) is capable of receiving a stop (8; 8') limiting the articulation of said other hinge (310, 320).

4. The device (2) for connecting and/or storing cables according to claim 3, **characterized in that** the housing (20) has a front wall (21) that delimits, with said other hinge (310, 320), a lateral outlet passage for the cable that can be closed off by said articulation limiting stop (8; 8').

5. The device (2) for connecting and/or storing cables according to one of the preceding claims, **characterized in that** each hinge (310, 320) comprises at least one orifice (301; 302) allowing the passage of said fastening means (701; 702), such as a screw, and another orifice (311; 312) allowing the passage of said locking means (711; 712), such as an automatic locking pin.

6. An installation comprising a receiving structure (10) having an insertion face that extends between two posts (11; 12) of said structure, and at least one device (2) for connecting and/or storing cables inserted between the two posts (11, 12),
**characterized in that** said device (2) is according to one of claims 1 to 5, one (320; 310) of said hinges being fastened by said fastening means (702; 701) to the corresponding post (12; 11), called pivot post, of the structure, and the other hinge (310; 320) being provided with said locking means (711; 712), which make it possible to lock and unlock said other hinge (310; 320) manually relative to the other post (11; 12) of the structure, called closing post.

7. The installation according to claim 6, **characterized in that** said locking means (711; 712) that can be manually activated/deactivated comprise a locking member, which crosses through an orifice (311; 312) formed in said other hinge (310; 320), and which is intended, in the storage position of the device (2), to be locked in an orifice (111; 122) of said closing post (11; 12).

8. The installation according to one of claims 6 or 7, **characterized in that** the fastening means (702; 701) for fastening said hinge (32; 31) to the pivot post (12; 11) comprise at least one screw, screwed, through an orifice (302; 301) of said hinge (320; 310), in an orifice (120; 110) of said pivot post (12; 11).

9. A method for assembling a device (2) for connecting and/or storing cables, in particular for fiber-optic cable terminations, in a receiving structure (10) having an insertion face that extends between two posts (11, 12) of said structure,
**characterized in that** said device (2) is according to one of claims 1 to 5, and **in that** the method comprises the following steps:
- inserting the device (2) for connecting and/or storing cables between the two posts (11, 12) of said structure,
- fastening one (320; 310) of said hinges on one (12; 11) of said posts, called pivot post, around which one wishes for the device (2) to be able to pivot,
- placing said locking means (711; 712) that can be manually activated/deactivated on the other hinge (310; 320) in order to allow said other hinge (310; 320) to be locked on the other post (11; 12), called closing post.

10. The assembly method according to claim 9, **characterized in that** said method further comprises a step for fastening, on said other hinge (310; 320), a stop (8; 8') for limiting the articulation of said other hinge (310,320).
